# EUROPÄISCHE PATENTANMELDUNG

(11) **EP 1 655 468 A2**
(43) Veröffentlichungstag der Anmeldung: **10.05.2006**
(21) Anmeldenummer: 05110076.6
(22) Anmeldetag: 27.10.2005
(51) Int. Cl.: F02C 9/26

(54) **Brennstoffdrosselventil zum Betreiben einer Brenneranordnung einer Gasturbine sowie Brenneranordnung mit Brennstoffdrosselventil**

(30) Priorität: 03.11.2004 CH 18132004
(71) Anmelder: Alstom Technology Ltd, 5400 Baden (CH)
(72) Erfinder: Steinbach, Christian, 5432 Neuenhof (CH); Ulibarri, Nicolas, 5400 Baden (CH); Vogler, Daniel, Patrick, 5330 Zurzach (CH)

(57) **Zusammenfassung**

Beschrieben wird ein Brennstoffdrosselventil zum Betreiben einer Brenneranordnung für eine Gasturbinenanlage, das über ein Durchflussstück (2) mit einem Durchflusskanal (21) für den Brennstoff verfügt, mit einem den Brennstofffluss durch den Durchflusskanal (21) bestimmenden Kanalquerschnitt, längs dem ein Dichtmittel (61) zur gezielten Kanalquerschnittsreduzierung einbringbar oder vorgesehen ist. Ferner wird eine Brenneranordnung mit einem derartigen Brennstoffdrosselventil beschrieben.

Das Dichtmittel (61) ist reversibel aus einer ersten Stellung mit keiner oder minimaler Abdeckung des Kanalquerschnittes in eine zweite Stellung mit maximaler Abdeckung des Kanalquerschnittes kontinuierlich überführbar wobei das Dichtmittel (61) in der zweiten Stellung den Kanalquerschnitt nicht vollständig abdeckt.

## Beschreibung

### Technisches Gebiet

Die Erfindung bezieht sich auf ein Brennstoffdrosselventil zum Betreiben einer Brenneranordnung für eine Gasturbinenanlage, das über ein Durchflussstück mit einem Durchflusskanal für den Brennstoff verfügt, mit einem den Brennstofffluss durch den Durchflusskanal bestimmenden Kanalquerschnitt, längs dem ein Dichtmittel zur gezielten Kanalquerschnittsreduzierung einbringbar oder vorgesehen ist. Ferner wird eine Brenneranordnung vorgeschlagen, die über eine Vielzahl einzelner Brenner zur Befeuerung einer Brennkammer einer Gasturbinenanordnung verfügt, bei der jeder einzelne Brenner mit wenigstens einer Brennstoffleitung mit Brennstoff versorgbar ist und mittels des genannten Drosselventils einstellbar ist.

### Stand der Technik

Im Zuge des sich immer stärker ausprägenden Umweltbewusstseins werden auch die gesetzlichen Rahmenbedingungen für den Umweltschutz strenger, so insbesondere auch die gesetzlichen Anforderungen an umweltverträgliche Betriebsweisen von Energie erzeugenden Anlagen, wie beispielsweise Gasturbinenanlagen. Zugleich besteht der Wunsch nach leistungsoptimierenden Massnahmen zur Auslegung derartiger Energiekraftwerke, denen jedoch ohne Rücksichtnahme auf die strengen gesetzlich vorgegebenen Umweltaspekte nicht nachgekommen werden kann. So ist man insbesondere bei leistungsstarken Gasturbinenanlagen bestrebt die Schadstoffemissionen weitestgehend unter den gesetzlich vorgegebenen Grenzwerten zu halten. Nicht zuletzt aus den genannten ökologischen Gründen haben sich bei Gasturbinenanlagen Mehrfachbrenneranordnungen durchgesetzt, beispielsweise in Form von Ringbrennkammern, bei denen eine Vielzahl einzelner Vormischbrenner in zirkulärer Anordnung um die rotierenden Komponenten der Gasturbine vorgesehen ist, deren Heizgase über einen ringförmig ausgebildeten Strömungskanal unmittelbar einer nachgeordneten Turbinenstufe zugeführt werden. Eine derartige Ringbrennkammeranordnung ist beispielsweise aus der EP 597 138 B1 zu entnehmen, bei der eine Vielzahl als Vormischbrenner ausgebildete Brenner, wie sie beispielsweise der EP 387 532 A1 entnehmbar sind und als Doppelkegelbrenner bekannt geworden sind, ringförmig um die Brennkammer angeordnet sind. Derartige Mehrfachbrenneranordnungen ermöglichen relativ niedrige Flammentemperaturen, wodurch die Stickoxidbildung trotz großem Luftüberschuss klein gehalten werden kann. Diesem Brennerkonzept liegt die Tatsache zugrunde, dass die NOₓ-Bildung exponentiell mit der Flammentemperatur korreliert ist, d.h. die NOₓ-Bildung erfolgt hauptsächlich in den heissesten Flammenzonen. Das Mehrfachbrennerkonzept, vorzugsweise in Form von Ringbrennkammern, versucht daher die NOₓ-Emissionen durch Vermeidung derartig heisser Zonen innerhalb der Brennkammer zu verringern. Eine wesentliche Voraussetzung zur Vermeidung derartiger lokaler Hotspots ist die Erzeugung eines möglichst homogen ausgebildeten Brennstoff-/Luftgemisches, das in der Brennkammer zur Zündung unter Ausbildung einer Flamme mit einer homogenen Flammentemperatur gelangt. So lässt sich regelhaft feststellen, je homogener das Brennstoff-Luftgemisch innerhalb jedes einzelnen Vormischbrenners zur Ausbildung gelangt, desto niedriger ist die Spitzentemperatur innerhalb der Flammenzone und desto geringere NOₓ-Emissionswerte können erzielt werden.

Um jeden einzelnen Vormischbrenners innerhalb einer Mehrfachbrenneranordnung mit dem Ziel einer geringen bzw. reduzierten NOₓ-Erzeugung nutzen zu können, sind die einzelnen durch die Vormischbrenner erzeugten Flammen in einem engen Flammentemperaturbereich zu betreiben. Bereits geringe Störungen im Luftstrom, durch den jeder einzelne Vormischbrenner mit Zuluft versorgt wird, sowie Störungen in der Brennstoffverteilung, aber auch durch vorhandene Fertigungstoleranzen, denen jeder einzelne Vormischbrenner unterliegt, können in der Summe zu Abweichungen zwischen den Flammentemperaturen in den einzelnen Brennern führen, die sich nachteilig auf den Schadstoffaustoss auswirken.

Im Hinblick auf die derzeit angewandte Brennstoffversorgung einer Vielzahl zur Befeuerung einer Ringbrennkammer vorgesehner Vormischbrenner sind Ringleitungssysteme vorgesehen, von denen jeder einzelne Vormischbrenner mit Brennstoff versorgt wird. Zur Regulierung der Brennstoffversorgung der Gasturbine sind längs der die Ringleitungssysteme mit Brennstoff versorgenden Hauptbrennstoffleitungen Regulier- bzw. Absperrventile konventioneller Bauart vorgesehen. Zumeist handelt es sich hierbei um Absperrschieberventile, die längs eines Durchflusskanals ein fluiddicht mit dem Durchflusskanal verbundenes Kopfstück vorsehen, längs dem über einen Spindelantrieb ein als Dichtkeil ausgebildetes Dichtmittel beweglich und arretierbar vorgesehen ist. Durch Form und Größe des Dichtmittels, das sich in einer geschlossenen Ventilstellung fluiddicht an die Innenwand des Durchflusskanals anschmiegt, kann der Durchfluss eines durch den Durchflusskanals strömenden Mediums vollständig unterbunden werden.

### Darstellung der Erfindung

Der Erfindung liegt die Aufgabe zugrunde, Massnahmen zu treffen, durch die der Betrieb einer Brenneranordnung, vorzugsweise bestehend aus einer Vielzahl von einzelnen Brennern, für eine Gasturbinenanlage leistungsoptimiert und schadstoffreduziert, vornehmlich mit reduzierter Stickoxidemission, möglich wird. Insbesondere soll gewährleistet werden, dass die Ausbildung einer homogenen Flammentemperatur innerhalb einer Brennkammer sichergestellt wird, die von einer Vielzahl von einzelnen Brennern, vorzugsweise Vormischbrennern, befeuert wird. Insbesondere gilt es Vorsorge zu treffen, dass ein Erlöschen einzelner Brenner durch mangelnde oder vollständig unterbrochene Brennstoffzufuhr verhindert wird.

Die Lösung der der Erfindung zugrunde liegenden Aufgabe ist im Anspruch 1 angegeben. Gegenstand des Anspruches 11 ist eine lösungsgemäss ausgebildete Brenneranordnung mit einer Vielzahl einzelner Brenner zur Befeuerung einer Brennkammer, die unter der Massgabe der vorstehend in der Aufgabenformulierung enthaltenen Forderungen ausgebildet ist. Den Erfindungsgedanken vorteilhaft weiterbildende Merkmale sind Gegenstand der Unteransprüche sowie der Beschreibung insbesondere unter Bezugnahme auf die Ausführungsbeispiele zu entnehmen.

Um der Gefahr vorzubeugen, dass einzelne oder mehrere über eine gemeinsame Brennstoffleitung mit Brennstoff zu versorgende Brenner durch Fehlbedienung oder im Zuge eines Brennstoffdrosselvorganges nicht ausreichend mit Brennstoff versorgt werden, ist lösungsgemäss ein Brennstoffdrosselventil zum Betreiben einer Brenneranordnung für eine Gasturbinenanlage vorgeschlagen worden, das über ein Durchflussstück mit einem Durchflusskanal für den Brennstoff verfügt mit einem den Brennstofffluss durch den Durchflusskanal bestimmenden Kanalquerschnitt, längs dem ein Dichtmittel zur gezielten Kanalquerschnittsreduzierung einbringbar oder vorgesehen ist, und das sich derart auszeichnet, dass das Dichtmittel reversibel aus einer ersten Stellung mit keiner oder minimaler Abdeckung des Kanalquerschnittes in eine zweite Stellung mit maximaler Abdeckung des Kanalquerschnittes kontinuierlich überführbar ist, wobei das Dichtmittel in der zweiten Stellung den Kanalquerschnitt nicht vollständig abdeckt. Im Gegensatz zu den bisher bekannten und in Verwendung befindlichen Brennstoffdrosselventilen, die vorzugsweise in Form handelsüblicher Absperrschiebeventile ausgebildet sind und in einer geschlossenen Ventilstellung einen zu regulierenden Stoffstrom vollständig zum Erliegen bringen, sieht das lösungsgemässe Brennstoffdrosselventil in einer geschlossenen Ventilendstellung einen minimalen Durchströmungsquerschnitt längs des Durchflusskanales vor, der sicherstellt, dass der mit der entsprechenden Brennstoffleitung verbundene Brenner mit einer Mindestbrennstoffmenge versorgt wird, durch die der Verbrennungsprozess innerhalb des Brenners aufrechterhalten bleibt.

Die Grössenwahl des in der geschlossenen Endstellung des Brennstoffdrosselventils verbleibenden minimalen Durchströmungsquerschnittes ist grundsätzlich unter geeigneten Gesichtspunkten zu wählen, beispielsweise zur optimierten Versorgung eines jeweiligen Brenners mit einer für den Niedrig- oder Teillastbereich der Gasturbinenanlage erforderlichen Mindest-Brennstoffmenge und dies vorzugsweise unter mageren Vormischbedingungen. Selbstverständlich sind auch andere Dimensionierungskriterien für die Auslegung des minimalen Durchströmungsquerschnittes heranzuziehen.

Für den Betrieb einer Gasturbinenanlage dient das lösungsgemässe Brennstoffdrosselventil zur Einstellung einer optimierten Brennstoffversorgung einer Vielzahl von Brennern. Hierbei ist in jeder einzelnen Brennstoffversorgungsleitung, durch die die einzelnen Vormischbrenner mit Brennstoff versorgt werden, ein lösungsgemässes Brennstoffdrosselventil vorgesehen, das zumindest eine minimale Brennstoffversorgung gewährleistet, bei der die Brennerflamme gerade nicht erlischt. Dies ist der Fall, wenn das lösungsgemässe Brennstoffdrosselventil seine geschlossene Endstellung einnimmt, bei der, wie vorstehend ausgeführt, ein minimaler Strömungsspalt für die Brennstoffversorgung erhalten bleibt. Durch die Gewährleistung, dass jeder einzelne Brenner mit einer Mindestmenge an Brennstoff versorgt wird, kann sicher davon ausgegangen werden, dass alle Brenner am Verbrennungsvorgang teilnehmen. Dies stellt wiederum sicher, dass im Bestreben, eine möglichst homogen verteilte Flammentemperatur zu erreichen, keine räumlichen Brennkammerbereiche entstehen, die sich durch stark erhöhte Temperaturen auszeichnen. Somit trägt das lösungsgemässe Brennstoffdrosselventil dazu bei, den Vorgang der Verteilung der Brennstoffzufuhr auf jeden einzelnen Brenner unter Massgabe einer sich möglichst homogen ausbildenden Flammentemperatur zu erleichtern. Darüber hinaus vermag das lösungsgemässe Drosselventil auch während des normalen Brennerbetriebes durch entsprechende Einstellung und Fixierung für eine exakt dosierte Brennstoffversorgungsrate zu sorgen. Weitere Einzelheiten sind aus dem im Weiteren dargestellten Ausführungsbeispiel zu entnehmen.

Wie bereits vorstehend angedeutet, ermöglicht das lösungsgemässe Brennstoffdrosselventil den Einsatz in einer Brenneranordnung mit einer Vielzahl einzelner Brenner zur Befeuerung einer Brennkammer einer Gasturbinenanordnung, bei der jeder einzelne Brenner mit wenigstens einer Brennstoffleitung mit Brennstoff versorgbar ist, wobei in jeder Brennstoffleitung, die unmittelbar jeweils zu einem Brenner führt, ein Brennstoffdrosselventil vorgesehen ist, das sich durch die vorstehend beschriebenen Merkmale hinsichtlich der Gewährleistung einer Mindestbrennstoffversorgung, auszeichnet. Oft sind derartige Mehrfachbrenneranordnungen in Brennergruppen unterteilt, wobei jede einzelne Brennergruppe über jeweils eine ihr zugehörige Brennstoffhauptversorgungsleitung mit Brennstoff versorgt wird, von der einzelne Brennstoffleitungen zu den einzelnen Brennern pro Brennergruppe abzweigen. Lösungsgemäss ist längs einer jeweils zu einem Brenner hinführenden Brennstoffleitung ein Brennstoffdrosselventil der vorstehenden Bauart vorgesehen. In einer vorteilhaften Ausführungsform ist darüber hinaus auch längs einer jeden Brennstoffhauptversorgungsleitung ein entsprechendes Brennstoffdrosselventil eingebracht, um eine Regelung der Hauptbrennstoffversorgung zu einer ausgewählten Brennergruppe vornehmen zu können. Auch in diesem Fall dient das lösungsgemässe Brennstoffdrosselventil längs einer Brennstoffhauptversorgungsleitung dazu, einen Mindestbrennstoffzufluss längs der Brennstoffhauptversorgungsleitung zu gewährleisten.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Perspektivische Ansicht eines lösungsgemäss ausgebildeten Brennstoffdrosselventils,
- Fig. 2: Beispiel einer Querschnittsdarstellung eines lösungsgemäss ausgebildeten Brennstoffdrosselventils, sowie
- Fig. 3: Brenneranordnung mit lösungsgemäss angeordneten Brennstoffdrosselventilen.

### Wege zur Ausführung der Erfindung, gewerbliche Verwendbarkeit

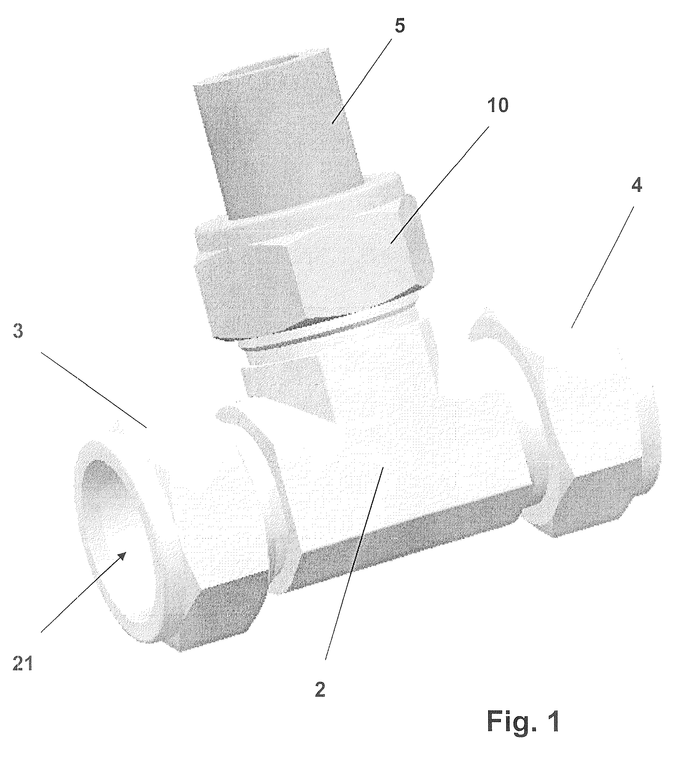

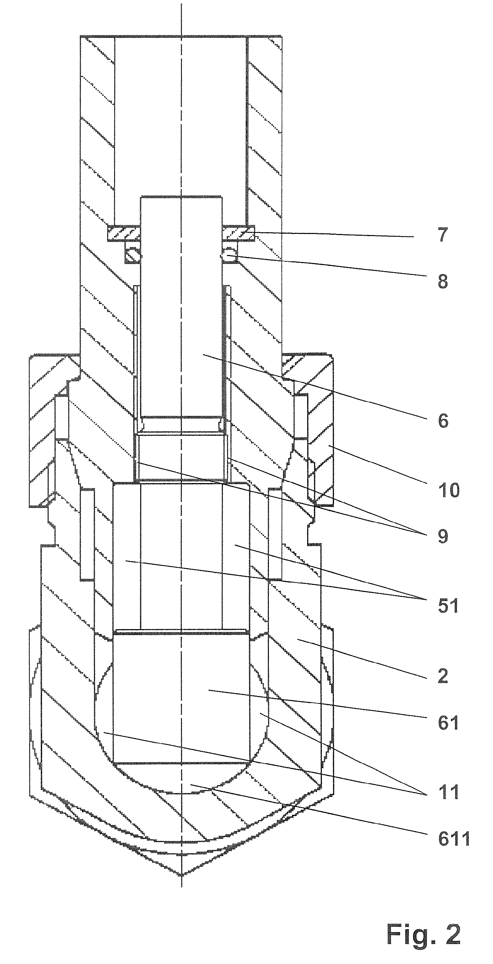

In Figur 1 ist in perspektivischer Darstellung ein lösungsgemäss ausgebildetes Brennstoffdrosselventil 1 dargestellt, das in Art eines Absperrschieberventils ausgebildet ist, das ein Durchflussstück 2 aufweist, durch das vorzugsweise gasförmiger Brennstoff längs eines Durchflusskanals 21 hindurchtritt. Das Durchflussstück 2 weist längs des Durchflusskanals 21 beidseitig zwei Anschlussflanschmuttern 3, 4 auf, über die das Durchflussstück 2 in eine nicht dargestellte Brennstoffleitung implementierbar ist. Das zwischen den beiden Anschlussflanschen 3, 4 vorgesehene Durchflussstück 2 ist T-förmig ausgebildet und fluiddicht mit einem Kopfstück 5 verbunden. Die Verbindung des Kopfstückes 5 mit dem Durchflussstück 2 erfolgt über einen fluiddichten Presssitz. Hierzu stellt eine Überwurfmutter 10, die das Kopfstück 5 in das Durchflussstück 2 in der in Figur 2 näher dargestellten Weise drückt, eine mechanisch und fluiddichte Verbindung zwischen beiden Komponenten sicher.

In Figur 2 ist eine Längsschnittdarstellung durch das Kopfstück 5 und das mit dem Kopfstück 5 verbundene Durchflussstück 2 dargestellt. Im Inneren des Kopfstückes 5 ist längs beweglich ein Dichtmittel 61 gelagert, das einstückig mit einem bolzenförmig ausgebildeten Stellorgang 6 verbunden ist. Das Stellorgan 6 ist über einen Gewindeabschnitt 9 mit dem Kopfstück 5 verbunden. Wird das Stellorgan 6 um seine Längsachse verdreht, so wird über das als Feingewinde ausgebildete Gewinde 9 die Rotationsbewegung des Stellorgans 6 in eine Linearbewegung umgesetzt, wodurch das Dichtelement 61 gezielt in den Bereich des Durchflusskanals 21 des Durchflussstückes positionierbar ist. Für eine gezielte Rotation des Stellorgans 6 weist dieses vorzugsweise an seinem oberen Ende eine Ausnehmung auf (nicht dargestellt) bspw. in Form einer Innenimbuskontur, in die ein geeignetes Werkzeug einsetzbar ist, das manuell oder motorisch betätigbar ist.
Eine Dichtung 8, vorzugsweise in Form von einer O-Ringdichtung, die längs des Stellorgans 6 vorgesehen ist, sorgt für eine fluiddichte Abdichtung zwischen dem Kopfstück 5 und dem darin längs beweglichen Stellorgan 6. Ein Sicherungsring 7 ist für eine zusätzliche mechanische Führung und Zentrierung des Stellorgans 6 sowie für eine verbesserte Dichtfunktion vorgesehen.

Für einen festen und fluiddichten Sitz des Kopfstückes 5 innerhalb des T-förmig ausgebildeten Durchflussstückes 2 sorgt eine Überwurfmutter 10, die das Kopfstück 5 fluiddicht in eine geeignet ausgebildete Presssitzpassung innerhalb des Durchflussstückes 2 verpresst.

Das Dichtmittel 61 ist als zylinderförmig ausgebildetes Kopfende des bolzenförmigen Stellorgans 6 ausgebildet und weist eine in Längsrichtung des Stellorgans 6 dem Durchflusskanal 21 zugewandte Kopfkontur 611 auf, die an die Innenkontur des Durchflusskanals 21 angepasst ist.

In der in Figur 2 dargestellten Längsschnittsdarstellung ist jene Endstellung des Dichtmittels 61 dargestellt, in der das Dichtmittel 61 vollständig in den Durchflusskanal 21 hineinragt. Da der Durchflusskanal 21 einen kreisrunden Querschnitt aufweist, vermag das ansonsten zylinderförmig ausgebildete Dichtmittel den Strömungsquerschnitt des Durchflusskanals 21 nicht vollständig abzudecken. Vielmehr verbleiben in der in Figur 2 dargestellten Endstellung des Dichtmittels 61 minimale seitliche Durchströmungsbereiche 11, durch die Brennstoff auch in der in Figur 2 dargestellten geschlossenen Endstellung des Brennstoffdrosselventils hindurchtreten kann, wodurch für eine Minimalversorgung eines im weiteren noch zu beschreibenden Vormischbrenners mit Brennstoff gesorgt ist.

Abweichend von der konkreten Ausführungsform, die in Figur 2 dargestellt ist, kann sowohl die Innenkontur des Durchflusskanals 21 sowie auch die Aussenkontur des Dichtmittels 61 unterschiedlich ausgebildet sein, wesentlich ist jedoch, dass das Dichtmittels 61 in der geschlossenen Brennstoffdrosselventilstellung nicht den vollständigen Strömungskanalquerschnitt des Durchflusskanals 21 abdeckt.

Eine weitere, nicht dargestellte Möglichkeit der Ausbildung des Dichtmittels 61 sieht eine Aussenkontur vor, die der Innenkontur des Durchflusskanals entspricht, in diesem Fall sind jedoch im Bereich des Dichtmittels 61 Durchströmungsöffnungen eingearbeitet, die für die Aufrechterhaltung eines minimalen Durchflussstromes durch das Brennstoffdrosselventil in der geschlossenen Stellung sorgen.

Die geschlossene Endstellung des Brennstoffdrosselventils ist bei dem Ausführungsbeispiel gemäss Figur 2 erreicht, sobald das Dichtmittel 61 mit seinem Konturbereich 611 an die Innenkontur des Durchflusskanals 21 anstösst. Ausgehend von dieser geschlossenen Endstellung ist das Dichtmittel 61 durch Verdrehen des Stellorgans 6 in eine vollständig geöffnete Stellung überführbar, in der das Dichtmittel 61 vollständig in einer entsprechenden Ausnehmung 51 innerhalb des Kopfstückes 5 zurückgezogen ist. In diesem Fall steht der Brennstoffströmung der gesamte Strömungsquerschnitt des Durchflusskanales 21 zur Verfügung.

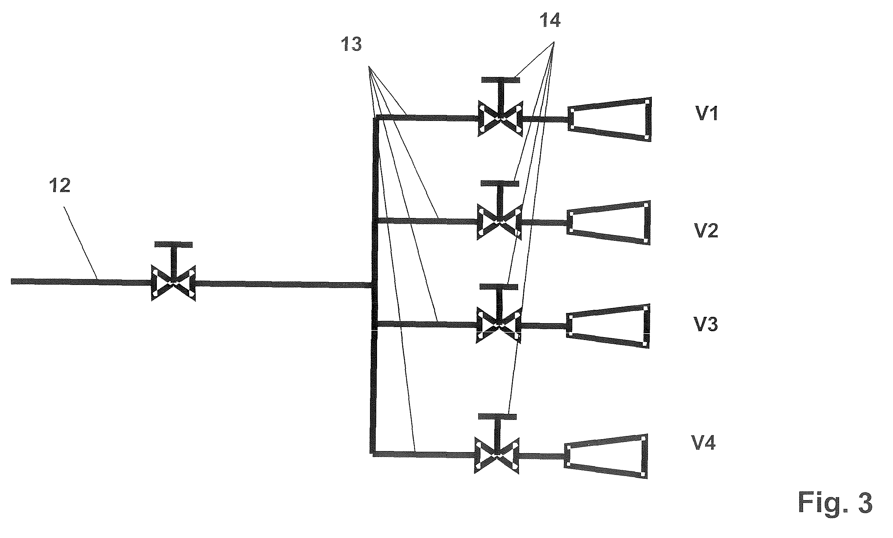

In Figur 3 ist eine schematisierte Teildarstellung einer Brenneranordnung dargestellt, die vier Vormischbrenner V1 bis V4 aufweist. Die Vormischbrenner V1 bis V4 werden gemeinsam über eine Brennstoffhauptversorgungsleitung 12 mit gasförmigen Brennstoff versorgt. Längs der Brennstoffhauptversorgungsleitung 12 ist ein Brennstoffdrosselventil, vorzugsweise nach der vorstehend erläuterten Bauart zur Brennstoffregulierung vorgesehen. Ausgehend von der gemeinsamen Brennstoffhauptversorgungsleitung 12 wird jeder einzelne Vormischbrenner V1 bis V4 über eine eigene Brennstoffleitung 13 mit Brennstoff versorgt. Längs jeder einzelnen Brennstoffleitung 13 ist ein Brennstoffdrosselventil 14 nach der vorstehend beschriebenen Bauart vorgesehen, das entweder manuell oder motorisch eingestellt werden kann. Ziel ist es, die Brennstoffverteilung individuell auf jeden einzelnen Brenner V1 bis V4 derart vorzunehmen, dass die sich innerhalb einer nicht dargestellten Brennkammer ausbildende Flamme eine homogen verteilte Flammentemperatur aufweist. Zu diesem Zweck werden die einzelnen Brennstoffdrosselventile 14 fein dosiert justiert bis die erwünschte homogene Flammentemperatur, die messtechnisch überwacht wird, erreicht ist. In diesem Fall werden die Stellorgane 6 der Brennstoffdrosselventile 14 gegen Dejustierung gesichert.

### Bezugszeichenliste

- 1: Brennstoffdrosselventil
- 2: Durchflussstück
- 21: Durchflusskanal
- 3, 4: Anschlussflansch
- 5: Kopfstück
- 51: Ausnehmung
- 6: Stellorgan
- 61: Dichtmittel
- 611: Kopfkontur
- 7: Sicherungsring
- 8: Dichtung
- 9: Gewindeabschnitt
- 10: Überwurfmutter
- 11: Durchströmungsbereich
- 12: Brennstoffhauptversorgungsleitung
- 13: Brennstoffleitung
- 14: Brennstoffdrosselventil
- V1...4: Vormischbrenner

## Patentansprüche

1. Brennstoffdrosselventil zum Betreiben einer Brenneranordnung für eine Gasturbinenanlage, das über ein Durchflussstück (2) mit einem Durchflusskanal (21) für den Brennstoff verfügt, mit einem den Brennstofffluss durch den Durchflusskanal (21) bestimmenden Kanalquerschnitt, längs dem ein Dichtmittel (61) zur gezielten Kanalquerschnittsreduzierung einbringbar oder vorgesehen ist,
**dadurch gekennzeichnet, dass** das Dichtmittel (61) reversibel aus einer ersten Stellung mit keiner oder minimaler Abdeckung des Kanalquerschnittes in eine zweite Stellung mit maximaler Abdeckung des Kanalquerschnittes kontinuierlich überführbar ist, und
dass das Dichtmittel (61) in der zweiten Stellung den Kanalquerschnitt nicht vollständig abdeckt.

2. Brennstoffdrosselventil nach Anspruch 1,
**dadurch gekennzeichnet, dass** das Durchflussstück (2) in Art eines Absperrschieberventils fluiddicht mit einem Kopfstück (5) verbunden ist, und
dass das Dichtmittel (61) innerhalb des Kopfstückes (2) längsbeweglich zum Kopfstück (5) gelagert und seitlich zumindest teilweise in den Durchflusskanal (21) einbringbar ist.

3. Brennstoffdrosselventil nach Anspruch 1 oder 2,
**dadurch gekennzeichnet, dass** das Dichtmittel (61) über ein Stellorgan (6) manuell oder motorisch verstellbar ist.

4. Brennstoffdrosselventil nach einem der Ansprüche 1 bis 3,
**dadurch gekennzeichnet, dass** der Durchflusskanal (21) eine Kanalinnenkontur und das Dichtmittel (61) eine Außenkontur aufweisen, und
dass die Außenkontur des Dichtmittels (61) und die Kanalinnenkontur des Durchflusskanals (21) zumindest bereichsweise nicht konturgleich ausgebildet sind.

5. Brennstoffdrosselventil nach einem der Ansprüche 1 bis 4,
**dadurch gekennzeichnet, dass** der Durchflusskanal (21) einen kreisrunden, ovalen oder einen von der Kreisform abweichenden, abgerundeten Kanalquerschnitt aufweist und dass das Dichtmittel (61) in Projektion längs des Durchflusskanals (21) wenigstens eine geradlinig ausgebildete Seitenkante aufweist.

6. Brennstoffdrosselventil nach einem der Ansprüche 2 bis 5,
**dadurch gekennzeichnet, dass** das Dichtmittel (61) in Form eines zylinderförmigen Körpers ausgebildet ist, der im Wesentlichen senkrecht zur Kanalachse des Durchflusskanals (21) beweglich gelagert ist.

7. Brennstoffdrosselventil nach Anspruch 5 oder 6,
**dadurch gekennzeichnet, dass** das Dichtmittel (61) in der zweiten Stellung zwei Durchströmungsbereiche (11) in Längsrichtung des Durchflusskanals (21) mit der Durchflusskanalwand einschließt, und
dass die Durchströmungsbereiche (11) einen minimalen Brennstoffdurchfluss in der zweiten Stellung des Dichtmittels (61) gewährleisten.

8. Brennstoffdrosselventil nach einem der Ansprüche 1 bis 3,
**dadurch gekennzeichnet, dass** der Durchflusskanal (21) eine Kanalinnenkontur und das Dichtmittel (61) eine an die Kanalinnenkontur angepasste Außenkontur aufweisen,
dass in der zweiten Stellung die Aussenkontur des Dichtmittels (61) bündig vollständig an der Kanalinnenkontur des Durchflusskanals (21) anliegt, und
dass das Dichtmittel (61) wenigstens eine Durchtrittsöffnung aufweist, durch die Brennstoff in der zweiten Stellung des Dichtmittels hindurchtritt.

9. Brennstoffdrosselventil nach einem der Ansprüche 1 bis 8,
**dadurch gekennzeichnet, dass** als Brennstoff gasförmiger Brennstoff verwendet wird.

10. Brennstoffdrosselventil nach einem der Ansprüche 1 bis 9,
**dadurch gekennzeichnet, dass** die erste und zweite Stellung des Drosselventils jeweils Ventilendstellungen darstellen, d.h. das Dichtmittel (61) befindet sich in Wirkverbindung mit einem mechanischen Anschlag, der eine weitere Verstellung des Dichtmittels (61) in einer vorgegebenen Verstellrichtung verhindert.

11. Brenneranordnung mit einer Vielzahl einzelner Brenner (V1,..., V4) zur Befeuerung einer Brennkammer einer Gasturbinenanordnung, bei der jeder einzelne Brenner (V1, ..., V4) mit wenigstens einer Brennstoffleitung (13) mit Brennstoff versorgbar ist,
**dadurch gekennzeichnet, dass** in jeder Brennstoffleitung (13), die unmittelbar jeweils zu einem Brenner (V1,..., V4) führt, ein Brennstoffdrosselventil vorgesehen ist, das nach einem der Ansprüche 1 bis 10 ausgebildet ist.

12. Brenneranordnung nach Anspruch 11,
**dadurch gekennzeichnet, dass** die einzelnen Brenner (V1,..., V4) zu Brennergruppen zusammengefasst sind,
dass jede Brennergruppe jeweils über eine getrennte Brennstoffhauptversorgungsleitung (12) mit Brennstoff versorgbar ist, von der aus die einzelnen Brennstoffleitungen (13) zu den einzelnen Brenner (V1,..., V4) pro Brennergruppe abzweigen, und
dass innerhalb einer Brennstoffhauptversorgungsleitung (12) jeweils ein Brennstoffdrosselventil vorgesehen ist.

13. Brenneranordnung nach Anspruch 12,
**dadurch gekennzeichnet, dass** das Brennstoffdrosselventil nach einem der Ansprüche 1 bis 10 ausgebildet ist.
